# EUROPEAN PATENT APPLICATION

(11) **EP 2 353 371 A1**
(43) Date of publication of application: **10.08.2011**
(21) Application number: 11154019.1
(22) Date of filing: 10.02.2011
(51) Int. Cl.: A01G 17/02

(54) **Mechanical unit for supporting and positioning of various devices passing over rows of plants**

(30) Priority: 10.02.2010 IT MN20100001
(71) Applicant: Guerrieri Gonzaga, Edoardo, 46030 Sustinente (Mantova) (IT); Guerrieri Gonzaga, Aliana, 20129 Milano (IT)
(72) Inventor: Guerrieri Gonzaga, Edoardo, 46030, Sustinente (Mantova) (IT)
(74) Representative: Gustorf, Gerhard

(57) **Abstract**

The device proposed concerns a set of head and jointed tool-holding bars, supported by a vehicle, overlaying with a horse-shoe structure tree rows and hedges, particularly vineyards, orchards, hedges and nurseries and featured by the following: it can be lifted, widened/narrowed and transversally oriented, it supports and handles couples of bars (8) either equipped with sprayers or motorized to permit different bifacial operations; in addition, the bars (8), of a standard type and capable to be variably equipped depending on the different requirements, are hinged in their upper part to the device head and can oscillate backwards parallel to the tree rows, in order to avoid damages in case of impacts with obstacles when moving forward. The device is preferably of a double type (bilateral as well as bifacial) and can be fitted onto a standard tool-holding platform, so as to carry out complete operations on two tree rows during a single drive through.

## Description

The invention consists of a set of mechanical parts composed of a mobile head incorporating an arm overlaying rows of trees, such as vineyards, orchards, nurseries or hedges, supporting replaceable arms and capable to be equipped with different types of operating units working in couples on the foot, trunk or foliage of both tree row sides at a time; the device can be fitted in a bilateral couple onto a vehicle driving through the tree row, preferably by means of a standard bilateral lifting tool-holding platform, also of an existing type, suitable to simultaneously handle two specular groups (RT and LF) working on two adjacent tree rows. The set of parts is of a standard type and capable to work with dedicated operating units, which can be of an existing type, and is featured by the following: possibility to vary, also while in motion, the distance between the specular operating units of each head depending on the foliage thickness, possibility to be inclined transversally with respect to the tree row in order to adjust to the possible foliage inclination, possibility for the equipped bars to oscillate in a controlled way parallel to the tree row, so as to avoid breakdowns further to impacts with obstacles, in order to guarantee job precision and high productivity, to avoid wearying the operator, to reduce trampling along the tree rows, as well as tree planting management costs.

It is herewith stressed that the invention permits the alternative application on the same head of various specific equipment for spraying or mechanical operations at the foot, trunk or foliage of the trees (for ex. weed killing or fertilization at the tree foot, trunk side-shoots removal, foliage spraying or trimming) and can be equipped with several operating units at a time (for ex. trimmers or side-shoots removing units) for an extensive multifunctionality of the device.

At present only specific mono-lateral / mono-facial and bifacial equipment are available, there is neither bilateral-bifacial equipment, nor equipment capable to be transversally inclined and variably equipped to work at the foot, trunk or foliage of the tree rows and in any case incorporating its own safety features.

The invention proposed is necessarily connected to already existing devices, such as the tool-holding platform, proximity sensors and, as regards spraying operations, a reservoir fitted onto the same or towed, pumps, pressure regulators, distributors, piping and spraying nozzles, whereas, in case of mechanic operations, it is connected to oleo-dynamic motors, pumps, distributors, hydraulic pistons, etc. and, in case of electric motors, to storage batteries, generators, etc.

The above device equipped with operating units, which can be replaced depending on the specific requirements, permits, instead, to obtain what has been described above and, if fitted onto the above mentioned standard bilateral lifting tool-holding platform equipped with suitable position sensors and electronic devices (electronic cabinets, processors, PLC or other), is capable to send signals to the operator or even control repositioning drivers, thanks to a higher or lower level of automation, so as to increase productivity, job precision and safety without wearying the operator.

The invention basically consists of an arm overlaying the tree rows holding the supports of the equipped bars: the one in the inner side of the tree row driven through by the vehicle is fixed, whereas the other one slides along the arm, for ex. thanks to a double action hydraulic piston, or to a different type of servo-mechanism, in order to vary the distance between the tool-holding bars, according to the transversal dimensions of the foliage and the operating units features.

The tree rows overlaying arm is hinged to the group support being part of the already mentioned platform, is composed of a double action widening / narrowing horizontal piston, is fixed to the same by means of the standard-type coupling plate and incorporates a horizontal hinge suitable to incline it upwards or downwards by certain degrees transversally with respect to the tree row, so as to adjust the two specular operating units to the possible foliage inclinations. A mobile element placed on the arm, which can be inclined externally with respect to the fixed bar support, slides thanks to suitable actuators and supports the equipped bar on the outer side of the tree row, being thus suitable to vary the distance between the couple of equipped bars.

The actuators driving the transversal inclinations and sliding movements can either be of the hydraulic type featuring double action pistons capable to provide high powers, or consists of d.c. reversible electric motors, incorporating power supply cables lighter and more flexible than hydraulic piping and capable to be easily housed also inside the arm itself. For example, when adopting the electric solution as transversal inclination actuator, an encoder-driven d.c. electric motor can be adopted, controlling the rotation of a worm screw, which in turn engages on a toothed sector coaxial to the hinge, whereas the tree row overlaying bar translation is driven by another d.c. electric motor controlling the rotation of a threaded shaft which in turns engages into a nut screw housed into a guide inside the bar supporting arm; both devices are protected and can preferably be removed.

The cables and connecting pipes to the operating units equipping the bars can also be housed inside the arm; as an alternative they can run externally, preferably in the rear side of the device. Each support, a fixed inner one and a sliding one on the outer tree row side, onto which the equipped bars capable to be inclined parallel to the tree row are hinged, incorporates at least one elastic element, for instance a spiral spring, which normally keeps the bar in a vertical position adjacent to a front support, but lets it oscillate backwards in case of impacts with obstacles, thus avoiding damages to the plant and/or tool; besides, the hinge is preferably equipped with an electric or hydraulic sensor, which detects the bar inclination and provides the relevant signal to the operator, or, in case of automated solutions, instructs the actuators (hydraulic pistons or electric motors), by means of the tool-holding platform electronic cabinet, controlling the most suitable widening and/or repositioning of the device, or even the vehicle stop.

It is stressed here that the bars, which can variably be equipped and replaced, can be composed of several parts, the lower section being preferably capable to retract like a telescope inside the first one, so as to satisfy different requirements: for instance, in case they are equipped with parts suitable to operate at the foot of the tree rows, a lower device facilitates transfers, as well as storage; the bars can also reach different shapes depending on their equipment.

The invention includes the chosen path definition and the positioning of the electric and/or oleo-dynamic junctions with grouped quick connections, which can be placed either on each bar, or on the platform fixing point and/or directly grouped into a distributing box on the platform along with the electronic cabinet, as the end-user may prefer, for economic and operating reasons, to replace the tools fitted onto each bar, to replace the bars with other ones already equipped with the requested parts, or even to replace on both sides the entire horse-shoe structure, i.e. the set of head and arm, plus equipped bars.

It is also possible to place a vertical hinge between the plate of the platform double action horizontal hydraulic pistons and the one of the set of parts itself, so that the same can fold and reduce its transversal dimensions during transfers. The above is included in this invention both in the manual rotation version and in the one with mechanic rotation obtained thanks to double action hydraulic pistons or other systems.

The above can be further explained by figures from 1 to 5 on the attached table. The first one shows an overall view of the rear right side of the invention, in particular: the standard flange 1 of the supporting equipped platform onto which is fixed, by means of the corresponding flange 2, the first section 3 of the transversal arm 4 supporting the too-holding bars, capable to be inclined by means of the horizontal hinge 5 due to the action of the toothed sector-worm screw-motor electro-mechanic group 6 coaxial to said hinge 5, taking advantage of an already existing solution. It is stressed here that the upward / downward inclination is normally limited to a few degrees and is controlled by the operator either "at sight", or further to a signal, if detected by the sensors which are not dealt with here, and is determined by a suitable electronic cabinet (programmed card, processor, PLC or other devices, even of an existing type).

The figure also shows the support 7 of the tree row inner side tool-holding bar 8 featured by a parallelepipedal section, fixed with the removable plug 9 and capable to oscillate backwards, while the other support (outer tool-holding bar) 11 of the post forming the horse-shoe structure overlaying the tree row slides with the coupling box 10 along the supporting arm 4 outdistancing / approaching the bars, better to say the operating units, in order to reach the suitable distance between the same.

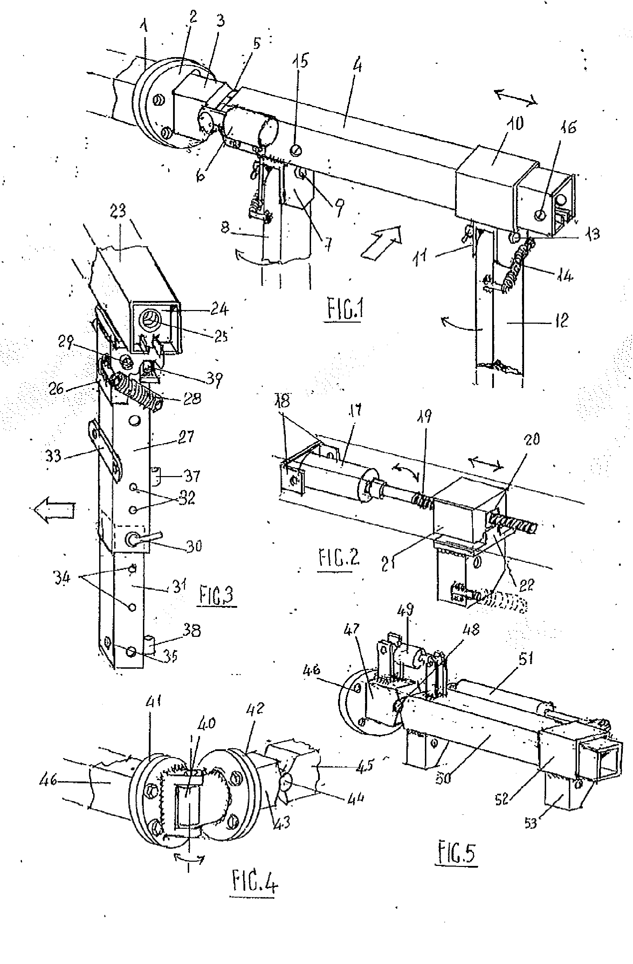

In figure 1 the arm 4, composed of an open section in is lower part, refers to an example of a sliding movement provided by an electric motor - threaded shaft - block or slide with nut screw connected to the above support 11 of the bar 12 fixed with the removable plug 13, which also can oscillate backwards and is kept in a vertical position adjacent to the support by means of the spring 14. The figure shows on the arm 4 the side holes, such as 15 and 16, required to fix respectively the sliding electro-mechanic group and an end cover, which is not shown here.

Figure 2 shows a front view scheme of the electro-mechanic group which, housed inside the supporting arm, makes the mobile post slide; the figure shows: the reversible d.c. electric motor 17 with the ears 18 to fix it to the supporting arm, the threaded shaft 19, the nut screw 20 housed into the slide-block 21, the support 22 of the outer mobile bar.

Fig. 3 shows the mobile support group 26, not equipped here with the sliding outer coupling, integral with the inner guide 24 sliding inside the transversal arm 23, the nut screw 25 and the tool-holding bar, which is here divided into two parts, the upper section 27 hanging from the support by means of the removable plug 29 kept adjacent to the support by the spring 28, the lower section 31, capable to retract like a telescope inside the upper one 27, being in turn supported by a removable plug such as item 30, which, in turn can be pre-set with holes, such as item 35, to fix the units working at the foot of the tree row, for instance in case of weed killing operations. Both bars are shown, as an example, with holes such as items 32 and 34 or the plate 33 pre-set for fixing the operating units, differently from the unit-holding couplings, which are also foreseen, that can be placed along the bars.

The same figure shows under item 39 the positioning of an inclination sensor of the bar hitting an obstacle suitable, as already mentioned, to provide the relevant signal or even inputs. The electrical cables and piping feeding the motorized operating units arranged on the bars are preferably placed on the rear side of the same and conveyed by whippings, such as items 37 and 38, whereas the ones related to the transversal arm positioning can be housed inside the arm itself. It is stressed here that, thanks to simple solutions, the heads, the RT and LF bars and the various components can become standard, thus reducing manufacturing costs.

Fig. 4 shows an example of vertical axis hinge placed between the tool-holding platform and the horse-shoe structure support group suitable to make the overlaying structure rotate, manually or thanks to double action hydraulic pistons, so as to reduce the device transversal dimensions during transfers, with no need for disconnections. The figure shows: the vertical hinge group 40 interposed and fixed on one side to the widening piston plate 41 of the tool-holding platform 46 and on the other to the plate 42 of the invention being illustrated by means of the stub 43, the horizontal axis hinge 44 and the inclinable transversal arm 45.

Fig. 5 shows the solution calling for the hydraulic positioning, instead of the electro-mechanic one, of both the inclination and the sliding support, in particular: the junction plate 46 to the stub 47, the horizontal hinge 48, the double action hydraulic piston 49 controlling the upward/downward inclination of the transversal arm 50 with the double action hydraulic piston 51 which, fixed onto the arm itself, makes the coupling 52 slide with the support 53 of the tool-holding bar overlaying the tree row.

What has been mentioned above and described in the figures is to be considered as being valid for both the specular groups of head and supporting bars and in any case as a non limiting example for experts; for example the drivers controlling the transversal inclination and the widening/retracting of the outer bar can be partly obtained thanks to double action hydraulic pistons as shown in fig. 5, instead of by means of electro-mechanic devices, the transversal arm between the two bars can be equipped with a foliage upper trimming unit with rotating scissors or with an alternating motion bar, also of an existing type, electrically or oleo-dynamically driven, the device can be equipped with position control encoders and electronic cabinets to control, calculate, signal and/or activate the repositioning actuators, without going outside the limits of this invention, which particularly concerns mechanic kinematics and drivers.

## Claims

1. Set of mechanical groups suitable to perform the defence and maintenance of plants, vineyards and hedges arranged in rows and composed of one head equipped with a transversal inclinable arm, preferably bifacial, overlaying the rows and incorporating two supports with hanging bars; the same can be equipped with different devices to carry out ground level operations, on the trunk or foliage on both sides of the plant row; the device is also suitable for different row widths. The device can be applied to a vehicle driving through the plant rows preferably by means of a pre-existent multi-purpose tool-holding raising platform, suitable to handle simultaneously and while in motion both the transversal and upward/downward positioning of two sets of symmetric heads overlaying the rows and working on both row sides.
The device can vary, also when in motion, the distance between the equipped bars by shifting only the external one and adjusting its width depending on the specific operation units fitted onto the same, as well as on the foliage thickness; the set of arm and bars form a horse-shoe overlay structure suitable to be transversally inclined with respect to the plant row to adjust to any possible foliage inclination, with each equipped bar incorporating a safety device as it can oscillate backwards parallel to the row in case of obstacles; said set of arm and bars is manufactured preferably in two specular units (right and left) and fitted onto a pre-existent multi-purpose bilateral tool-holding platform. The above system is aimed at improving the job, increasing productivity, avoiding any operator's weariness and reducing both trampling in the plant rows and the overall costs of both equipment and tree planting management.

2. Head group with transversal arm supporting a couple of bars, which can be equipped as per claim 1, to be fitted with two symmetric plant row overlaying bifacial units onto a pre-existent bilateral tool-holding platform; its interconnection with the platform permits, through operator controls and/or automation devices, its positioning in height, width and distance between the operation units, its adjustment to the inclination and misalignment of the foliage thanks to the signals and/or controls sent to the actuators it is equipped with; the above is aimed at performing correct operations and increasing productivity.

3. Head group supporting bars suitable to be equipped as described in the above claims, capable to vary, even when in motion, the distance between the bars through the sliding of the external plant row overlaying bar and, if needed, the repositioning of the head unit, thanks to reversible electric motors or double-action hydraulic pistons driven by the operator or automated and controlled in order to adjust the same to the requested foliage thickness and/or to other parameters.

4. Head group as described in the above claims where each equipped bar hangs from the support by means of a removable plug and can oscillate backwards held by a spring with controlled recovery; the same is preferably equipped with an inclination sensor in order to: permit a quick replacement of the bar while not in operation, avoid any damage to the equipment or the plants during the job and to indicate the inclination to the operator and/or to other devices suitable for the job.

5. Head group as described in the above claims where the tool-holding bars are made of two sections with the lower one also being supported by a removable plug and retractable like a telescope in its upper section in order to permit the replacement of the lower equipment only, while keeping the upper one unchanged, even when the units are not in operation (for ex. removal of the side-shoots removing machine, while keeping the trimming machine) and to lower the whole equipped portal during transfers to carry out ground level operations at the foot of the plant row.

6. Head group with bars, which can be equipped as described in the above claims, that foresees, between the transversal arm supporting the bars and the tool-holding platform fixing plate, the adoption of a horizontal hinge permitting its transversal inclination with respect to the plant row, as well as the one of the bars, which are kept in the parallel position., with the purpose of adjusting the same to the possible variations of the foliage orthogonality with respect to the ground between the plant rows driven through by the vehicle it is fitted onto.

7. Head group with bars suitable to be equipped as described in the above claims and in particular in claim 6 featured by the fact that the possible transversal inclinations of the arm are carried out thanks to a double-action hydraulic piston or to a d.c. electric motor, which can be reversed even when in motion by the operator through special controls or automatically thanks to dedicated detectors fitted on the tool-holding platform and controlled by the electronic cabinet with the purpose of adjusting the entire unit to the various situations and to properly operate on the foliage.

8. Head group with bars suitable to be equipped as described in the above claims, and in particular to be fitted onto a bilateral plant row overlaying tool-holding platform as mentioned in claim 2, featured by the fact that each of them can turn manually or thanks to double-action hydraulic pistons around a vertical axis placed between the platform and the head unit, so as to place itself in the driving direction, thus reducing the unit transversal dimensions during transfers.

9. Unit as described in the above claims where the electrical and/or oleo-dynamic link-ups of the motorized units are featured by quick connections placed close to the equipped bars, especially the plant row overlaying ones, and/or in other positions, such as close to the junction between the head and the platform or in other nodal points in order to answer the various requirements of the end users.

10. Mechanical unit totally or partly as described, illustrated and claimed above, suitable to work at the foot, on the trunk or foliage of plants arranged in rows or of hedges and to carry out various operations such as spraying, trimming, removal of side-shoots, leaves-stripping and others; the same is composed of a head with an inclinable arm transversal to the row, supporting bars suitable to be completed with various equipment and serves other operation units capable to carry out the different activities and to reach various positions which can be pre-set and/or controlled by the operator and/or automated; the unit is preferably manufactured to perform multi-rows bifacial operations and is fitted onto a multi-purpose bilateral tool-holding raising platform equipped with sensors and an electronic cabinet in order to automate the above mentioned operations.
